# EUROPÄISCHE PATENTSCHRIFT

(11) **EP 3 683 637 B1**
(45) Veröffentlichungstag und Bekanntmachung des Hinweises auf die Patenterteilung: **22.03.2023**
(21) Anmeldenummer: 19152018.8
(22) Anmeldetag: 16.01.2019
(51) Int. Cl.: G05B 19/418

(54) **VERFAHREN ZUM HERSTELLEN EINER BIDIREKTIONALEN VERBINDUNG ZWISCHEN EINEM GERÄT, INSBESONDERE EINEM FELDGERÄT, UND EINER APPLIKATION IN EINER ZENTRALEN EINRICHTUNG**
METHOD FOR PRODUCING A BIDIRECTIONAL CONNECTION BETWEEN A DEVICE, IN PARTICULAR A FIELD DEVICE, AND AN APPLICATION IN A CENTRAL DEVICE
PROCÉDÉ D'ÉTABLISSEMENT D'UNE CONNEXION BIDIRECTIONNELLE ENTRE UN APPAREIL, EN PARTICULIER UN APPAREIL DE TERRAIN, ET UNE APPLICATION DANS UN DISPOSITIF CENTRALISÉ

(43) Veröffentlichungstag der Anmeldung: 22.07.2020
(73) Patentinhaber: Siemens Aktiengesellschaft, 80333 München (DE)
(72) Erfinder: Huck, Ralf, 63538 Großkrotzenburg (DE)
(74) Vertreter: Siemens Patent Attorneys

(56) Entgegenhaltungen:
- EP-A1- 2 782 414
- WO-A1-2016/136670
- WO-A1-2016/136670
- DE-A1-102016 107 045
- DE-A1-102016 107 045
- US-A1- 2012 069 827
- US-A1- 2018 026 840

## Beschreibung

Die Erfindung betrifft ein Verfahren zum Herstellen einer bidirektionalen Verbindung zwischen einem Feldgerät, und einer Applikation in einer zentralen Einrichtung.

In automatisierten Prozessanlagen dienen Feldgeräte zur Erfassung und/oder Beeinflussung von Prozessgrößen (Prozessvariablen) . Dabei werden Prozessgrößen, wie zum Beispiel Füllstand, Durchfluss, Druck, Temperatur oder pH-Wert, von Messumformern (Sensoren) erfasst, während Aktoren, wie zum Beispiel Ventile oder Pumpen, zur Beeinflussung von Prozessvariablen, z. B. dem Durchfluss einer Flüssigkeit in einem Rohrleitungsabschnitt oder dem Füllstand in einem Behälter, dienen.

Aus der Offenlegungsschrift DE 10 2016 107 045 A1 ist ein Verfahren zum sicheren Konfigurieren eines Feldgeräts der Prozessautomatisierung bekannt. Darin authentifiziert sich ein Benutzer gegenüber einem Server, durch den ein Konfigurationstelegramm erzeugt wird. Das Konfigurationstelegramm wird an eine Rechnereinheit des Benutzers gesendet und von dort an das Feldgerät.

Die Druckschrift WO 2016/136670 A1 offenbart eine Mehrzahl an Messgeräten, die mit einem Server verbunden sind. Die Verbindung zwischen den Messgeräten und dem Server wird mittels eines externen Netzwerks, beispielsweise einem öffentlichen Kommunikationsnetz, hergestellt.

Die Anmeldung US 2012/0069827 A1 zeigt ein System, das ein Client Terminal mit einer primären und einer sekundären Kommunikationsschnittstelle umfasst. Das Client Terminal ist über die primäre Kommunikationsschnittstelle über eine langreichweitige Verbindung mit einem Wireless Access Point verbinden, der mit einem Kommunikationsnetzwerk gekoppelt ist. Über die sekundäre Kommunikationsschnittstelle ist das Client Terminal über eine kurzreichweitige Verbindung mit einem Proxy-Gerät gekoppelt.

EP 2 782 414 A1 offenbart ein System, das eine Mehrzahl an lokalen Geräten umfasst, die jeweils mit einem tragbaren Bridge-Gerät verbunden sind. Über das tragbare Bridge-Geräte wird eine Verbindung zu einem Netzwerk hergestellt. Das tragbare Bridge-Gerät ist über eine kurzreichweitige Verbindung mit den lokalen Geräten gekoppelt.

Feldgeräte erzeugen neben den unmittelbar für die Prozesssteuerung bzw. -regelung benötigten Daten (z. B. Messwerte) viele Zusatzinformationen, die es erlauben, Prozesse ständig zu optimieren und ungeplante Anlagenstillstände beispielsweise durch vorausschauende Wartung auf Basis von Diagnosedatenaus den Feldgeräten zu vermeiden.

Bei der Parametrierung von Feldgeräten in einer Anlage besteht das Erfordernis, dass neben den geänderten Daten in dem Gerät auch die entsprechenden zentral, z. B. in einem Server oder einer Cloud, gehaltenen Daten konsistent geändert werden.

Da Feldgeräte in vielen Anwendungen nur über analoge Ein-/ Ausgangskarten an Steuerungen oder Leitsystemen angebunden sind, können diese nicht auf die digitalen Daten der Feldgeräte zugreifen und an die zentrale Einrichtung übergeben. Die Daten von batteriebetriebenen Geräten können auch nicht ohne weitere Hilfsmittel an einen zentralen Server übergeben werden, weil diese Geräte nicht über eine elektrische Leitung oder eine langreichweitige Funkverbindung mit dem zentralen Server verbunden sind.

In beiden Fällen können die Daten also lediglich vor Ort über ein Parametriertool und eine elektrische Punkt-zu-Punkt Serviceschnittstelle oder eine kurzreichweitige Funkschnittstelle des Gerätes ausgelesen werden. In Multiuser-Anwendungen wäre es jedoch von Vorteil, wenn die Daten jederzeit mit einer Datenbank auf einem zentralen Server abgeglichen werden können. Derartige bekannte Systeme (z. B. PDM Maintenance Station), erfordern jedoch eine datentechnische Verbindung zwischen dem zentralen Server und dem Feldgerät. Insbesondere in Brownfield-Anlagen ist die entsprechende Infrastruktur jedoch oft nicht vorhanden, und eine Nachrüstung wäre sehr aufwendig, z. B. über die parallele Installation einer funktechnischen Infrastruktur oder die nachträgliche Installation von HART Multiplexern/Gateways.

Bei den digitalen Daten kann es sich in der umfangreichsten Anwendung um Messwerte, Diagnose-, Kalibrier-, Konfigurations- oder Parametrierdaten der Geräte handeln.

Eine mögliche Lösung für das beschriebene Problem wäre die Modernisierung der Ein-/Ausgangsebene durch Austausch rein analoger Baugruppen durch Baugruppen mit zusätzlichen digitalen Kommunikationsmöglichkeiten (z. B. HART Kommunikation) oder das Nachrüsten aller Ein-/Ausgangskarten mit HART Multiplexern zum parallelen Auslesen der Daten. Beides ist mit hohem Aufwand und im erstgenannten Fall mit einem Anlagenstillstand (Produktionsausfall) für den Anlagenbetreiber verbunden.

Eine Alternative wären die Nachrüstung aller Feldgeräte mit einer Funkschnittstelle (second data channel) und der Aufbau einer funktechnischen Infrastruktur mit ortsfesten Access Points, Leitungen oder Repeatern und Gateways. In weit verteilten Anlagen kann eine solche funktechnische Infrastruktur sehr aufwendig und bei Fehlen geeigneter Energiequellen zu Versorgung der zusätzlich benötigten Komponenten auch unmöglich werden.

Der Erfindung liegt die Aufgabe zugrunde, mit einfachen Mitteln bzw. auf einfache Weise einen temporären bidirektionalen Datenaustausch zwischen einem Feldgerät und einer zentralen Einrichtung zu ermöglichen, so dass z. B. beim Ändern von Daten in einzelnen Feldgeräten immer auch die zentral gehaltenen Daten konsistent geändert werden können.

Gemäß der Erfindung wird die Aufgabe durch das in Anspruch 1 angegebene Verfahren gelöst, von dem vorteilhafte Weiterbildungen in den Unteransprüchen angegeben sind.

Gegenstand der Erfindung ist somit ein Verfahren zum Herstellen einer bidirektionalen Verbindung zwischen einem Feldgerät und einer Applikation in einer zentralen Einrichtung mittels einer auf einem mobilen Kommunikationsendgerät laufenden Bridge-Funktion, die
eine kurzreichweitige Funkverbindung zu dem Feldgerät aufbaut,
eine langreichweitige Funkverbindung zu der Applikation in der zentralen Einrichtung aufbaut und
einen Datenkanal zur bidirektionalen Kommunikation zwischen der Applikation in der zentralen Einrichtung über die langreichweitige Funkverbindung und dem Feldgerät über die kurzreichweitige Funkschnittstelle aufbaut.

Als mobiles Kommunikationsendgerät kommen z. B. Smartphones, Tabletcomputer, Laptops oder andere geeignete Consumergeräte in Frage.

Die kurzreichweitige Funkverbindung zwischen dem Kommunikationsendgerät und dem zu parametrierenden Feldgerät kann zum Beispiel nach dem Bluetooth-Standard oder einem anderem von dem Kommunikationsendgerät unterstützten Standard erfolgen.

Die Bridge-Funktion läuft autonom im Hintergrund auf dem mobilen Kommunikationsendgerät ab. Die Bridge-Funktion kann automatisch die kurzreichweitige Funkverbindung zu dem Feldgerät oder mehreren Feldgeräten auf, sobald sich das Kommunikationsendgerät in Funkreichweite des Feldgerätes oder der Feldgeräte befindet. Die sich jeweils aktuell in Funkreichweite befindenden Feldgeräte können automatisch auf dem Kommunikationsendgerät angezeigt werden, so dass der Benutzer unter den angezeigten Feldgeräten das für den Datenaustausch mit der zentralen Einheit jeweils vorgesehene Feldgeräte auswählen kann.

Die langreichweitige Funkverbindung zwischen dem Kommunikationsendgerät und der zentralen Einrichtung kann nach einem Mobilfunk-Standard, z. B. GSM, oder über WLAN und einen drahtlosen Zugangspunkt der zentralen Einrichtung erfolgen. Erfindungsgemäß wird die langreichweitige Funkverbindung zu der Applikation automatisch aufgebaut werden, sobald sich das Kommunikationsendgerät in Funkreichweite des drahtlosen Zugangspunkts befindet. Bei der zentralen Einrichtung kann es sich z. B. um einen lokalen Server oder eine Cloud handeln.

Sobald die die kurzreichweitige Funkverbindung zu dem Feldgerät und die langreichweitige Funkverbindung zu der zentralen Einrichtung besteht, stellt die Bridge-Funktion erfindungsgemäß den Datenkanal für die bidirektionale Kommunikation zwischen der Applikation in der zentralen Einrichtung und dem Feldgerät her. Um mit Hilfe der zentralen Applikation Daten des Feldgerätes anzuzeigen oder zu verändern, beispielsweise Diagnosedaten, Parameter- oder Kalibrierdaten aus dem Feldgerät zu lesen oder Parameter- oder Kalibrierdaten in das Feldgerät zu übertragen oder dort zu ändern, wird mittels eines in dem mobilen Kommunikationsendgerät enthaltenen Browsers über die langreichweitige Funkverbindung auf die Applikation zugegriffen. Der Browser und die Bridge-Funktion stellen dabei erfindungsgemäß zwei voneinander unabhängige, parallel arbeitende Funktionen dar. Weil über den Browser auf ein Parametriertool in Form der zentralen Applikation zugegriffen wird, wird auf dem mobilen Kommunikationsendgerät selbst keine eigene Parametrierfunktion benötigt.

Durch den ausschließlichen Zugriff auf nur eine zentrale Applikation und durch den bidirektionalen Datenaustausch über den Datenkanal wird eine permanent konsistente Datenhaltung zwischen dem Feldgerät und der Applikation in der zentralen Einrichtung erreicht, d. h., bei Änderung von Daten in einzelnen Feldgeräten werden immer auch die zentral gehaltenen Daten entsprechend geändert.

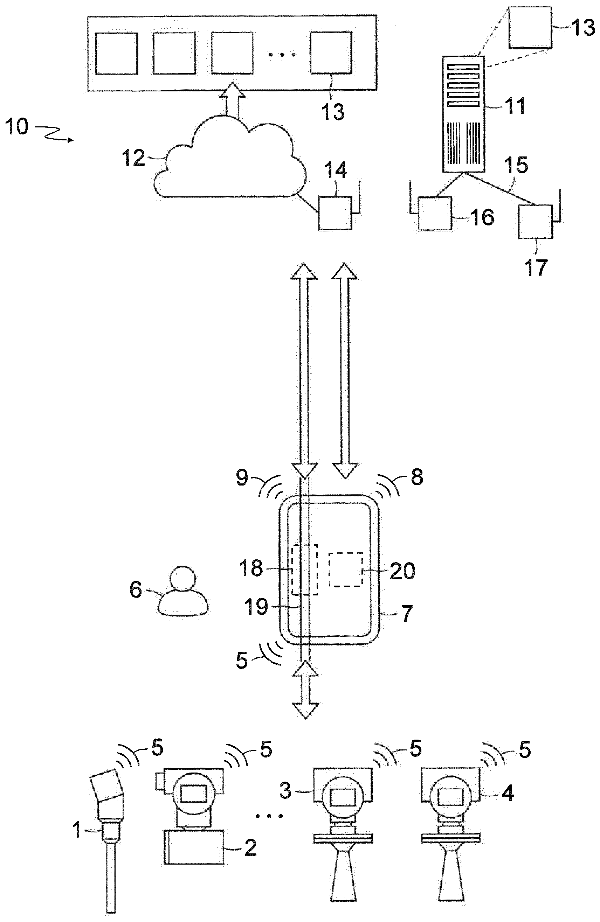

Im Weiteren wird die Erfindung anhand eines Ausführungsbeispiels und unter Bezugnahme auf die Figur der Zeichnung erläutert.

Die Figur zeigt einige Feldgeräte 1, 2, 3, 4, wie sie in einer Vielzahl in einer Prozessanlage vorhanden und oft weit verteilt sind. Die Geräte 1, 2, 3, 4 weisen Funkschnittstellen auf, die kurzreichweitige Funkverbindungen 5 nach dem Bluetooth- oder NFC-Standard ermöglichen. Ein sich in der Anlage aufhaltender Techniker 6 ist mit einem mobilen Kommunikationsendgerät 7, wie ein Smartphone, Tablet oder anderes mobiles Gerät mit vergleichbaren Funktionen, ausgestattet, welches über drahtlose Kommunikationsmöglichkeiten (Funkschnittstellen) wie Bluetooth oder NFC 5, WLAN 8 und Mobilfunk (GSM) 9 verfügt.

In einer zentralen Einrichtung 10, bei der es sich um einen lokalen Server 11 oder eine Cloud 12 handeln kann, ist eine Applikation 13 zur Parametrierung der Feldgeräte 1, 2, 3, 4 enthalten. Der Zugriff auf die Applikation 13 in der Cloud 12 kann direkt über Mobilfunk 9 oder indirekt über WLAN 8 und einen drahtlosen Zugangspunkt 14 mit Cloud-Konnektivität erfolgen. Der lokale Server 11 ist über WLAN 8 erreichbar und über ein lokales Netzwerk 15 mit verteilten drahtlosen Zugangspunkten (Wireless Access Point) 16, 17 verbunden.

Das mobile Kommunikationsendgerät 7 enthält ein im Hintergrund laufende Bridge-Funktion 18, die dazu ausgebildet ist, automatisch eine kurzreichweitige Funkverbindung 5 beispielsweise zu dem Feldgerät 3 und eine WLAN-Verbindung 8 oder Mobilfunkverbindung 9 zu der Applikation 13 in der zentralen Einrichtung 10 aufzubauen und anschließend einen bidirektionalen Datenkanal 19 zwischen dem Feldgerät 3 und der Applikation 13 in der zentralen Einrichtung 10 herzustellen. Bei dem Datenkanal 19 handelt es sich um eine temporäre, im Hintergrund des Kommunikationsendgerätes 7 laufende Verbindung. Das mobile Kommunikationsendgerät 7 enthält ferner einen Browser 20, der es dem Benutzer 6 ermöglicht, auf die Applikation 13 zuzugreifen und über diese Applikation 13 und den Datenkanal 19 das Feldgerät 3 zu parametrieren. Das Kommunikationsendgerät 7 benötigt daher keine eigene Parametrierfunktion. Durch den Datenaustausch über den bidirektionalen Datenkanal 19 wird sichergestellt, dass die Parameterdaten in der Applikation 13 und dem Feldgerät 3 konsistent sind. Der Browser 20 und die Bridge-Funktion 18 stellen also zwei voneinander unabhängige, parallel arbeitende Funktionen des mobilen Kommunikationsendgerätes 7 dar. Das Kommunikationsendgerät 7 mit dem Browser-Zugang zu der zentralen Applikation 13 kann daher auch dann genutzt werden, wenn noch keine Verbindung zwischen der Applikation 13 und dem Gerät 3 besteht.

Die auf dem mobilen Kommunikationsendgerät 7 im Hintergrund laufende Bridge-Funktion 18 zum Aufbau des parallelen Datenkanals 19 und der Browser 20 haben in Verbindung mit der Applikation 13 in der zentralen Einrichtung 10 beispielsweise folgende Funktionalität:
- Automatischer temporärer Verbindungsaufbau durch die Bridge-Funktion 18 mit der kurzreichweitigen Funkschnittstelle eines der Feldgeräte 1, 2, 3, 4, sobald sich das Kommunikationsendgerät 7 in Reichweite des entsprechenden Gerätes, z. B. 3, befindet. Falls das Feldgerät nicht über eine Funkschnittstelle verfügt, kann zunächst eine elektrische Punkt-zu-Punkt Verbindung mit dem Kommunikationsendgerät 7 und einem geeigneten Modem hergestellt werden.
- Automatischer Verbindungsaufbau durch die Bridge-Funktion 18 zu der Applikation 13 in der zentralen Einrichtung 10, z. B. in dem lokalen Server 11 über WLAN 8 oder in der Cloud 12 über Mobilfunk 9.
- Automatischer Aufbau des Datenkanals 19 zur bidirektionalen Kommunikation zwischen der Applikation 13 in der zentralen Einrichtung 10 über WLAN 8 bzw. Mobilfunk 9 und einer Serviceschnittstelle des Feldgerätes 3 über die kurzreichweitige Funkschnittstelle 5 oder ggf. die oben erwähnte elektrische Punkt-zu-Punkt Verbindung.
- Meldung der temporär und bidirektional erreichbaren Feldgeräte (z. B. 2, 3 und 4), die durch die im Hintergrund laufenden Bridge-Funktion 18 zeitgleich mit der zentralen Applikation 13 gefunden werden.
- Ermöglichen des Zugriffs auf die Applikation 13 zur Geräteparametrierung durch den Benutzer 6 über den Browser 20 und die WLAN-Verbindung 8 oder Mobilfunkverbindung 9. Der Benutzer 6 kann auf seinem Kommunikationsendgerät 7 z.B.
- ein Feldgerät, z. B. 3, aus der Liste der temporär mit dem Kommunikationsendgerät 7 verbundenen Feldgeräte 2, 3 und 4 auswählen,
- Messwerte, Diagnose-, Kalibrier-, Konfigurations- oder Parametrierdaten des temporär verbundenen Feldgerätes 3 auf der cloud- oder server-basierten Applikation 13 ansehen und ggf. mit archivierten und im Gerät 3 vorgefundenen Daten vergleichen,
- über die Applikation 13 Daten in einer cloud- oder server-basierten Datenbank modifizieren (z. B. durch manuelles Ändern einzelner Daten oder Reaktivierung archivierter Datensätze)
- durch Up- oder Download über den Datenkanal 19 eine Synchronisierung der Daten zwischen der zentralen Einrichtung 10 und dem Feldgerät 3 herbeiführen.

Im Unterschied zu einer bisherigen direkten Punkt-zu-Punkt Verbindung zwischen einem Parametriergerät und dem Feldgerät 3 erfolgt die Verbindung jetzt indirekt über die zentrale Einrichtung 10 (lokaler Server 11 oder Cloud 12) und von dort wieder zurück zu dem Feldgerät 3. Die Verbindung (Datenkanal 19) besteht im Hintergrund und nur temporär. Hieraus ergeben sich folgende Vorteile:
- Es handelt sich um eine rein softwarebasierte Lösung zur Kommunikation mit Geräten, die selbst nicht permanent mit einem digitalen Netzwerk verbunden sein müssen.
- Es wird die vorhandene Tool-Infrastruktur verwendet, so dass keine Investitionen in neue Hardware erforderlich sind.
- Es erfolgt kein Eingriff in die Ein-/Ausgangsebene der Anlage, der zu Anlagenstillständen/Produktionsausfällen führen könnte.
- Die Lösung läuft automatisch im Hintergrund auf einem mobilen Kommunikationsendgerät, so dass keine manuellen Eingriffe an den Feldgeräten erforderlich sind, wenn diese über eine Funkschnittstelle verfügen. Andernfalls muss lediglich kurzzeitig eine elektrische Punkt-zu-Punkt-Verbindung mit dem entsprechenden Gerät aufgebaut werden. Der bidirektionale Datenkanal zwischen Server/Cloud und Feldgerät wird auch dann automatisch aufgebaut.
- Die Lösung ist multiuser-fähig, d. h. paralleles Arbeiten mit mehreren mobilen Kommunikationsendgeräten (Browsern) ist möglich, ohne dass dabei die Datenkonsistenz verloren geht, da alle Anwender auf der gleichen Datenbank arbeiten.
- Es ist ein lesender Zugriff auf den gesamten Datenbestand der Anlage möglich, also nicht nur die Punkt-zu-Punkt erreichbaren Daten.
- Für die im Hintergrund laufende Funktion zum Aufbau der bidirektionalen Kommunikation wird nur geringe Rechenleistung benötigt.
- Neben dem einfachen Browser mit Zugriff auf ein zentrales Parametriertool ist kein zusätzliches Parametriertool auf dem mobilen Kommunikationsendgerät erforderlich. Damit kann die Lösung auf beliebigen Smartphones oder Tablets realisiert werden.

## Patentansprüche

1. Verfahren zum Herstellen einer bidirektionalen Verbindung (19) zwischen einem Feldgerät (1, 2, 3, 4), und einer Applikation (13) in einer zentralen Einrichtung (10) mittels einer auf einem mobilen Kommunikationsendgerät (7) laufenden Bridge-Funktion (18), die eine kurzreichweitige Funkverbindung (5) zu dem Feldgerät (1, 2, 3, 4) aufbaut,
eine langreichweitige Funkverbindung (8, 9) zu der Applikation (13) in der zentralen Einrichtung (10) aufbaut und
einen Datenkanal (19) zur bidirektionalen Kommunikation zwischen der Applikation (13) in der zentralen Einrichtung (10) über die langreichweitige Funkverbindung (8, 9) und dem Feldgerät (1, 2, 3, 4) über die kurzreichweitige Funkschnittstelle (5) aufbaut,
**dadurch gekennzeichnet, dass** die Bridge-Funktion (18) autonom im Hintergrund läuft, und dass zur Änderung und/oder Anzeige von Daten des jeweils über den Datenkanal (19) mit der Applikation (13) in der zentralen Einrichtung (10) verbundenen Feldgerätes (1, 2, 3, 4) mittels eines in dem mobilen Kommunikationsendgerät (7) enthaltenen Browsers (20) über die langreichweitige Funkverbindung (8, 9) auf die Applikation (13) zugegriffen und mittels dieser Applikation (13) Daten geändert und über den Datenkanal (19) in das verbundene Feldgerät (1, 2, 3, 4) geladen oder Daten aus dem Feldgerät (1, 2, 3, 4) über den Datenkanal (19) gelesen und zur Anzeige gebracht werden, wobei der Browser (20) und die Bridge-Funktion (18) voneinander unabhängige Funktionen des mobilen Kommunikationsendgeräts (7) darstellen, wobei die langreichweitige Funkverbindung (8) über einen drahtlosen Zugangspunkt (14, 16, 17) der zentralen Einrichtung (10) erfolgt, und die langreichweitige Funkverbindung (8) zu der Applikation (13) automatisch aufgebaut wird, sobald sich das Kommunikationsendgerät (7) in Funkreichweite des drahtlosen Zugangspunkts (14, 16, 17) befindet.

2. Verfahren nach Anspruch 1, **dadurch gekennzeichnet, dass** die kurzreichweitige Funkverbindung (5) nach dem Bluetooth, NFC- (near field communication-) oder ZigBee-Standard erfolgt.

3. Verfahren nach Anspruch 1 oder 2, **dadurch gekennzeichnet, dass** die kurzreichweitige Funkverbindung (5) zu dem Feldgerät (1, 2, 3, 4) oder mehreren Feldgeräten aufgebaut wird, sobald sich das Kommunikationsendgerät (7) in Funkreichweite des Feldgerätes (1, 2, 3, 4) oder der Feldgeräte befindet.

4. Verfahren nach Anspruch 3, **dadurch gekennzeichnet, dass** sich in Funkreichweite befindende Feldgeräte (1, 2, 3, 4) von der Bridge-Funktion (18) auf dem Kommunikationsendgerät (7) automatisch angezeigt werden.

5. Verfahren nach einem der vorangehenden Ansprüche, **dadurch gekennzeichnet, dass** die langreichweitige Funkverbindung (9) nach einem Mobilfunk-Standard erfolgt.

6. Verfahren nach einem der Ansprüche 1 bis 5, **dadurch gekennzeichnet, dass** durch den ausschließlichen Zugriff auf nur eine zentrale Applikation (13) und durch Datenaustausch über den Datenkanal (19) eine permanent konsistente Datenhaltung zwischen dem Feldgerät (1, 2, 3, 4) und der Applikation (13) in der zentralen Einrichtung (10) erreicht wird.

## Claims

1. Method for establishing a bidirectional connection (19) between a field device (1, 2, 3, 4) and an application (13) in a central facility (10) by means of a bridge function (18) running on a mobile communication terminal (7), which establishes a short-range radio connection (5) with the field device (1, 2, 3, 4),
establishes a long-range radio connection (8, 9) with the application (13) in the central facility (10) and establishes a data channel (19) for bidirectional communication between the application (13) in the central facility (10) via the long-range radio connection (8, 9) and the field device (1, 2, 3, 4) via the short-range radio interface (5),
**characterised in that** the bridge function (18) runs autonomously in the background, and, in order to change and/or display data of the field device (1, 2, 3, 4) connected via the data channel (19) to the application (13) in the central facility (10) in each case, the application (13) is accessed by means of a browser (20) contained in the mobile communication terminal (7) via the long-range radio connection (8, 9) and data is changed by means of said application (13) and loaded via the data channel (19) into the connected field device (1, 2, 3, 4) or data is read from the field device (1, 2, 3, 4) via the data channel (19) and displayed, wherein the browser (20) and the bridge function (18) represent mutually independent functions of the mobile communication terminal (7), wherein the long-range radio connection (8) takes place via a wireless access point (14, 16, 17) of the central facility (10), and the long-range radio connection (8) with the application (13) is established automatically as soon as the communication terminal (7) is located in radio range of the wireless access point (14, 16, 17).

2. Method according to claim 1, **characterised in that** the short-range radio connection (5) takes place according to the Bluetooth, NFC (Near-Field Communication) or ZigBee standard.

3. Method according to claim 1 or 2, **characterised in that** the short-range radio connection (5) with the field device (1, 2, 3, 4) or a plurality of field devices is established as soon as the communication terminal (7) is located in radio range of the field device (1, 2, 3, 4) or the field devices.

4. Method according to claim 3, **characterised in that** field devices (1, 2, 3, 4) located in radio range are automatically displayed by the bridge function (18) on the communication terminal (7).

5. Method according to one of the preceding claims, **characterised in that** the long-range radio connection (9) takes place according to a mobile radio standard.

6. Method according to one of claims 1 to 5, **characterised in that** by exclusively accessing only a central application (13) and by exchanging data via the data channel (19), a permanently consistent data retention is achieved between the field device (1, 2, 3, 4) and the application (13) in the central facility (10).

## Revendications

1. Procédé d'établissement d'une connexion (19) bidirectionnelle entre un appareil (1, 2, 3, 4) sur site et une application (13) dans un dispositif (10) centralisé, au moyen d'une fonction (18) bridge, qui fonctionne sur un terminal (7) mobile de communication, qui établit une connexion (5) radio de courte portée avec l'appareil (1, 2, 3, 4) sur site,
qui établit une connexion (8, 9) radio de longue portée avec l'application (13) dans le dispositif (10) centralisé et qui établit un canal (19) de données pour la communication bidirectionnelle entre l'application (13) dans le dispositif (10) centralisé, par l'intermédiaire de la connexion (8, 9) radio de longue portée et l'appareil (1, 2, 3, 4) sur site, par l'intermédiaire de l'interface (5) radio de courte portée,
**caractérisé en ce que** la fonction (18) bridge fonctionne en arrière plan de manière autonome, et **en ce que**, pour la modification et/ou l'affichage de données de l'appareil (1, 2, 3, 4) sur site connecté par l'intermédiaire du canal (19) de données à l'application (13) dans le dispositif (10) centralisé, on accède à l'application (13) par l'intermédiaire de la connexion (8, 9) radio de longue portée, au moyen d'un navigateur (20) contenu dans le terminal (7) mobile de communication et on modifie les données au moyen de cette application (13) et on les charge, par l'intermédiaire du canal (19) de données, dans le terminal (1, 2, 3, 4) sur site connecté, ou on lit des données dans l'appareil (1, 2, 3, 4) sur site, par l'intermédiaire du canal (19) de données, et on les met à l'affichage, dans lequel le navigateur (20) et la fonction (18) bridge représentent des fonctions indépendantes l'une de l'autre du terminal (7) mobile de communication, dans lequel la connexion (8) radio de longue portée s'effectue par un point (14, 16, 17) d'accès sans fil du dispositif (10) centralité, et on établit la connexion (8) radio de longue portée avec l'application (13) d'une manière automatique, dès que le terminal (7) de communication se trouve dans la portée radio du point (14, 16, 17) d'accès sans fil.

2. Procédé suivant la revendication 1, **caractérisé en ce que** la connexion (5) radio de courte portée s'effectue suivant le Bluetooth, suivant la norme NFC (communication en champ proche) ou suivant la norme ZibBee.

3. Procédé suivant la revendication 1 ou 2, **caractérisé en ce que** l'on établit la connexion (5) radio de courte portée avec l'appareil (1, 2, 3, 4) sur site ou avec plusieurs appareils sur site, dès que le terminal (7) de communication se trouve dans la portée de l'appareil (1, 2, 3, 4) sur site ou des appareils sur site.

4. Procédé suivant la revendication 3, **caractérisé en ce que** l'on indique automatiquement, sur le terminal (7) de communication par la fonction (18) bridge, des appareils (1, 2, 3, 4) sur site se trouvant dans la portée radio.

5. Procédé suivant l'une des revendications précédentes, **caractérisé en ce que** la connexion (9) radio de longue portée s'effectue suivant une norme radio-mobile.

6. Procédé suivant l'une des revendications 1 à 5, **caractérisé en ce que**, par l'accès exclusif à seulement une application (13) centrale et par un échange de données, par l'intermédiaire du canal (19) de données, on obtient un maintien de données permanent cohérent entre l'appareil (1, 2, 3, 4) sur site et l'application (13) dans le dispositif (10) centralisé.
